# EUROPÄISCHE PATENTSCHRIFT

(11) **EP 2 319 154 B1**
(45) Veröffentlichungstag und Bekanntmachung des Hinweises auf die Patenterteilung: **08.06.2016**
(21) Anmeldenummer: 09782287.8
(22) Anmeldetag: 27.08.2009
(51) Int. Cl.: H02J 7/00, H01M 10/48

(54) **AKKUPACK**
BATTERY PACK
BATTERIE D'ACCUMULATEURS

(30) Priorität: 28.08.2008 DE 102008041642
(43) Veröffentlichungstag der Anmeldung: 11.05.2011
(73) Patentinhaber: Robert Bosch GmbH, 70442 Stuttgart (DE)
(72) Erfinder: FLINSPACH, Gunter, 71229 Leonberg (DE); OSSWALD, Alexander, 70599 Stuttgart (DE); HEINRICH, Thomas, 70771 Leinfelden (DE); GLAUNING, Rainer, 72631 Aichtal-Groetzingen (DE)
(86) Internationale Anmeldenummer: PCT/EP2009/061080
(87) Internationale Veröffentlichungsnummer: WO 2010/023246

(56) Entgegenhaltungen:
- EP-A- 1 612 907
- EP-A- 1 843 445
- GB-A- 2 387 020
- US-B1- 6 404 166

## Beschreibung

### Stand der Technik

Die Erfindung betrifft ein Akkupack gemäß Patentanspruch 1 und ein Verfahren zur Überprüfung eines Akkupacks gemäß Patentanspruch 9.

Aus EP 1 612 907 A2 ist ein Akkupack für Elektrohandwerkzeuge bekannt. Das Akkupack weist einen analogen Temperatursensor mit negativem Temperaturkoeffizienten auf und ist dazu eingerichtet, eine zugeordnete Elektrohandwerkzeugmaschine als Verbraucher zu versorgen bzw. an einem zugeordneten Ladegerät aufgeladen zu werden. Am analogen Temperatursensor ist eine von außen zugängliche Temperaturmessschnittstelle vorgesehen, über die eine im Elektrowerkzeug bzw. im Ladegerät angeordnete Akkuschutzelektronik mit einer Akkuschutzlogik und einem im Strompfad des Akkupacks angeordneten Leistungsschalter beeinflussbar ist.

Im Akkupack ist eine Auswerteeinheit vorhanden, die topologisch parallel zum analogen Temperatursensor geschaltet ist und über welche bei einem Notfallereignis der über die Temperaturmessschnittstelle von außen messbare Gesamtwiderstand aktiv verminderbar ist.

### Offenbarung der Erfindung

Die Aufgabe der Erfindung besteht darin, ein verbessertes Akkupack und ein verbessertes Verfahren zum Überwachen des Akkupacks bereitzustellen.

Die Aufgabe der Erfindung wird durch ein Akkupack gemäß Patentanspruch 1, 5 oder 6 und durch das Verfahren gemäß Patentanspruch 9, 11 oder 12 gelöst.

Erfindungsgemäß wird die Temperaturmessschnittstelle derart beeinflusst, dass ein angeschlossenes Gerät veranlasst wird, eine Schutzfunktion für das Akkupack auszuführen. Ein Vorteil der erfindungsgemäßen Akkupacks und des erfindungsgemäßen Verfahrens besteht darin, eine einfach aufgebaute Schaltungsanordnung und ein zuverlässiges Verfahren zum Erkennen einer Fehlfunktion des Akkupacks bereitzustellen. Dies wird dadurch erreicht, dass bei einer Fehlfunktion des Akkupacks eine Widerstandsmessung beeinflusst wird, so dass an der von außen zugänglichen Temperaturmessschnittstelle eine Veränderung des Widerstands detektiert werden kann. Dazu kann ein Widerstand zwischen der Temperaturmessschnittstelle und einem anderen Anschluss beeinflusst werden oder eine Spannung über die Temperaturmessschnittstelle ausgegeben werden. Damit ist eine sichere und zuverlässige Erkennung einer Fehlfunktion des Akkupacks möglich. Durch das Einspeisen der Fehlermeldung in die Temperaturmessschnittstelle kann diese Schnittstelle auch für die Detektion anderer Fehler verwendet werden.

Die Beeinflussung der Temperaturmessung kann zu einem plausiblen, aber nicht zutreffenden Temperaturwert führen, so dass eine externe Schaltung in Reaktion auf den bestimmten Widerstands- bzw. Temperaturwert das Akkupack so beschaltet, dass der tatsächliche Fehler ebenfalls behoben oder wenigstens abgemildert wird. Alternativ kann die Temperaturmessung zu einem unplausiblen Temperaturwert führen, was von einer externen Schaltung als Hinweis auf einen anderen Fehler ausgewertet werden kann. Vorbestimmte Temperaturwerte können dediziert einzelne Fehler signalisieren.

Abhängig von der gewählten Ausführungsform kann die Veränderung des Wider-stands bzw. die Ausgabe der Spannung gepulst oder dauerhaft vorgenommen werden.

### Kurze Beschreibung der Zeichnungen

Figur 1 zeigt in einer schematischen Darstellung einen Akkupack mit einer Schutzschaltung.
Figuren 2 bis 5 zeigen weitere Schutzschaltungen für das Akkupack aus Figur 1.
Figur 6 zeigt ein Elektrowerkzeug.
Figur 7 zeigt ein Ladegerät.

### Ausführungsformen der Erfindung

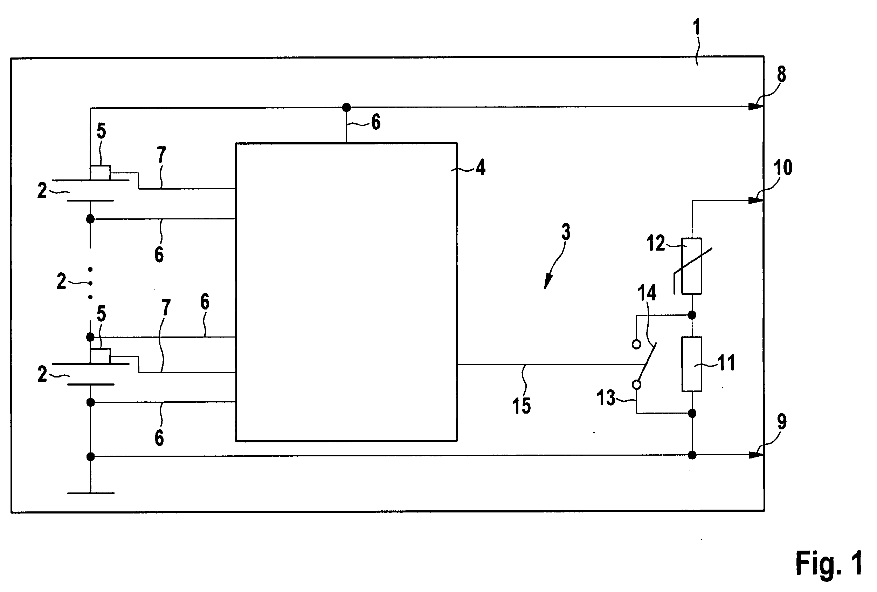

Figur 1 zeigt in einer schematischen Darstellung einen Akkupack 1, der eine oder mehrere Zellen 2 aufweist, die beispielsweise in Form von Li-lonen-Zellen als Akkumulatorzellen ausgebildet sind. Die Zellen 2 können parallel und/oder in Serie geschaltet sein. In der dargestellten Ausführungsform sind die Zellen 2 des Akkupacks 1 in Serie geschaltet.

Weiterhin ist eine Schutzschaltung 3 mit einer Auswerteeinheit 4 vorgesehen. Die Auswerteeinheit 4 ist mit mehreren Messleitungen 5 mit den einzelnen Zellen oder Gruppen von Zellen, insbesondere mit den elektrischen Polen der einzelnen Zellen verbunden. Weiterhin kann abhängig von der gewählten Ausführungsform die Auswerteeinheit 4 mit ausgewählten elektrischen Polen der Zellen verbunden sein. Zudem können Sensoren 5 an den Zellen vorgesehen sein, die beispielsweise die Temperatur der Zellen erfassen und an die Auswerteeinheit 4 weitergeben. Die Auswerteeinheit 4 erfasst aufgrund der Messleitungen 6 und/oder der Sensorleitungen 7 die Funktionsweise jeder einzelnen Zelle 2, einer Gruppe von Zellen 2 oder des gesamten Akkupacks 1, insbesondere die Spannung an den Polen und/oder den Stromfluss durch die Zellen 2.

Das Akkupack 1 weist einen ersten und einen zweiten elektrischen Anschluss 8, 9 auf, über den ein Spannungspotential bereitgestellt wird. In dem dargestellten Ausführungsbeispiel wird am ersten elektrischen Anschluss 8 eine positive Spannung und am zweiten elektrischen Anschluss 9 eine negative Spannung bzw. eine Massespannung bereitgestellt. Weiterhin weist das Akkupack 1 eine von außen zugängliche Messstelle 10 auf. Zwischen der Messstelle 10 und dem zweiten elektrischen Anschluss 9 sind ein erster und ein zweiter Widerstand 11, 12 in Serie geschaltet. Der erste elektrische Widerstand 11 ist als ohmscher Widerstand ausgebildet. Der zweite elektrische Widerstand 12 ist als NTC-Widerstand mit negativem Temperaturkoeffizienten ausgebildet. Parallel zum ersten Widerstand 11 ist eine Kurzschlussleitung 13 vorgesehen, die mit beiden Anschlüssen des ersten Widerstands 11 verbunden ist. In der Kurzschlussleitung 13 ist ein Schalter 14 vorgesehen. Der Schalter 14 steht über eine Steuerleitung 15 mit der Auswerteeinheit 4 in Verbindung.

Im Normalbetrieb des Akkupacks ist der Schalter 14 geschlossen und der erste Widerstand 11 ist über die Kurzschlussleitung 13 überbrückt. Somit ist an der von außen zugänglichen Temperaturmessschnittstelle, die zwischen dem zweiten elektrischen Anschluss 9 und der Messstelle 10 ausgebildet ist, nur der Spannungsabfall über den NTC-Widerstand 12 abgreifbar. Auf diese Weise kann eine Überhitzung des Akkupacks erfasst werden. Der NTC-Widerstand steht in engem Kontakt mit den Zellen des Akkupacks, insbesondere ist eine Wärme leiten-de Verbindung zwischen dem NTC-Widerstand und den Zellen des Akkupacks ausgebildet. Bei steigender Temperatur des Akkupacks sinkt der ohmsche Widerstand des NTC-Widerstands 12.

Die Auswerteeinheit 4 vergleicht die mit den Messleitungen 6 erfassten Parameter, insbesondere die Spannung und/oder den Strom, mit abgelegten Referenzwerten. Wird eine Abweichung des erfassten Wertes vom Referenzwert um mehr als beispielsweise 5 % erkannt, so wird eine Fehlfunktion im Akkupack durch die Auswerteeinheit 4 festgestellt.

Erkennt die Auswerteeinheit 4 eine Fehlfunktion des Akkupacks, so öffnet die Auswerteeinheit 4 den Schalter 14, so dass der erste Widerstand 11 wirksam in Serie mit dem NTC-Widerstand 12 geschaltet wird. Somit erkennt nach dem Öff-nen des Schalters 14 ein Messgerät beim Abgreifen der Spannung an der Temperaturmessschnittstelle 10, 9 oder nur an der Messstelle 10, dass ein erhöhter Widerstand oder ein erhöhter Spannungsabfall vorliegt.

In einer weiteren Ausführungsform besitzt der Widerstand 12 einen positiven Temperaturkoeffizienten (PTC) und die Auswerteeinheit 4 hält den Schalter 13 im Normalbetrieb offen und schließt den Schalter 13, wenn die Auswerteeinheit 4 eine Fehlfunktion des Akkupacks 1 erkennt. In jedem Fall weist der an der Temperaturmessschnittstelle 10, 9 bestimmbare Gesamtwiderstand im Fehlerfall auf eine höhere Temperatur als im Normalbetrieb hin.

Abhängig von der gewählten Ausführungsform kann die Auswerteeinheit 4 bei Erkennen einer Fehlfunktion auch den Schalter 14 gepulst öffnen und schließen. Auch in dieser Ausführungsform wird an der Temperaturmessschnittstelle 10, 9 eine gepulste Spannungsänderung, insbesondere eine gepulste Erhöhung des Spannungsabfalls festgestellt. Somit kann auch in diesem Fall eine Fehlfunktion des Akkupacks anhand der Temperaturmessschnittstelle 10, 9 erkannt werden, obwohl die Fehlfunktion nicht in einer Temperaturänderung des Akkupacks liegt. In einer einfachen Ausführung ist es auch ausreichend, nur die Spannung an der Messstelle 10 zu erfassen und auszuwerten. Aus der Änderung der Spannung an der Messstelle 10 kann auf eine Fehlfunktion des Akkupacks geschlossen werden.

Mit Hilfe der vorgesehenen Schutzschaltung 3 kann nicht nur eine zu niedrige oder zu hohe Temperatur des Akkupacks, insbesondere der einzelnen Zellen des Akkupacks, signalisiert werden, sondern es können auch anders gelagerte Störungen, z.B. ein elektrischer Defekt einzelner Zellen mithilfe der Temperaturmessschnittstelle 10, 9 ausgegeben und erkannt werden.

Die beeinflussten, über die Temperaturmessschnittstelle 10, 9 bestimmten Werte können so gewählt sein, dass ein einfaches Messgerät, das eine Plausibilisierung der Werte nicht durchführt, ein angemessenes Schutzverhalten zeigt, beispielsweise indem es das Akkupack abschaltet, und ein höher entwickeltes Messgerät einen spezifischen Fehler erkennt und ein für diesen angemessenes Schutzverhalten zeigt, beispielsweise durch temporäres Begrenzen eines Stroms durch das Akkupack.

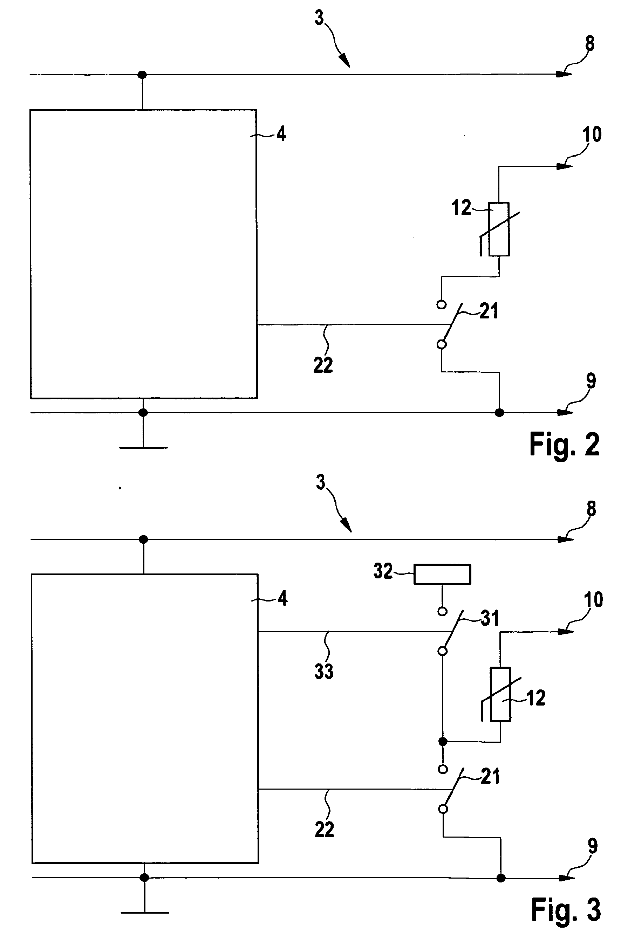

Figur 2 zeigt eine alternative Schutzschaltung 3 für das Akkupack 1 aus Figur 1. In der elektrischen Verbindung zwischen dem NTC-Widerstand 12 und dem zweiten elektrischen Anschluss 9 ist ein Schalter 21 vorgesehen, der über eine Steuerleitung 22 mit der Auswerteeinheit 4 in Verbindung steht.

Im Normalbetrieb des Akkupacks 1 ist der Schalter 21 geschlossen, so dass ein an der Temperaturmessschnittstelle 10, 9 bestimmbarer Widerstand auf eine Temperatur des NTC-Widerstandes 12 hinweist.

Erkennt die Auswerteeinheit 4 eine Fehlfunktion des Akkupacks, so öffnet die Auswerteeinheit 4 den Schalter 21, so dass der an der Temperaturmessschnittstelle 10, 9 bestimmbare Widerstand auf einen hohen Wert ansteigt. Praktisch liegt dieser Wert bei ca. 100 MΩ oder mehr, je nach dem, welche Bauart dem Schalter 21 zu Grunde liegt, beispielsweise ein MOSFET oder ein Relais. Somit erkennt nach dem Öffnen des Schalters 21 ein externes Messgerät beim Abgreifen der Spannung an der Temperaturmessschnittstelle 10, 9 oder nur an der Messstelle 10, dass ein erhöhter Widerstand oder ein erhöhter Spannungsabfall vorliegt.

Figur 3 zeigt eine weitere alternative Schutzschaltung 2 für das Akkupack 1 aus Figur 1. Zusätzlich zu der in Figur 2 gezeigten Beschaltung der Auswerteeinheit 4 ist ein weiterer Schalter 31 vorgesehen, der die Verbindung zwischen dem Schalter 21 und dem NTC-Widerstand 12 selektiv mit einer Spannungsquelle 32 verbindet. Der Schalter 31 ist mittels einer Steuerleitung 33 mit der Auswerteeinheit 4 verbunden.

Im Normalbetrieb des Akkupacks 1 ist der Schalter 21 geschlossen und der Schalter 31 geöffnet, so dass ein an der Temperaturmessschnittstelle 10, 9 bestimmbarer Widerstand auf eine Temperatur des NTC-Widerstandes 12 hinweist.

Erkennt die Auswerteeinheit 4 eine Fehlfunktion des Akkupacks, so öffnet die Auswerteeinheit 4 den Schalter 21 und schließt den Schalter 31, so dass an der Temperaturmessschnittstelle 10 eine Spannung anliegt. Ein mit der Temperaturmessschnittstelle 10, 9 verbundenes Messgerät bestimmt daher einen Wert, der bezüglich der Temperatur des NTC-Widerstandes 12 verstimmt ist.

Allgemein umfasst eine Widerstandsbestimmung üblicherweise eine Beaufschlagung eines zu bestimmenden Widerstandes mit einem Strom und ein Erfassen der an dem Widerstand abfallenden Spannung. Wird der Widerstand während der Messung mit einer zusätzlichen Spannung beaufschlagt, so repräsentiert der erfasste Spannungswert nicht mehr allein den Widerstand.

Eine alternative Messmethode sieht vor, den Widerstand mit einer Spannung zu beaufschlagen und den durch den Widerstand fließenden Strom zu erfassen. Wird die am Widerstand anliegende Spannung während der Messung durch eine zusätzliche Spannung verändert, so wird das Messergebnis wie in der oben beschriebenen Messmethode beeinflusst.

Durch passende Wahl der Größe und Polarität der zusätzlichen Spannung kann der erfasste Widerstand auf einen vorbestimmten Wert verschoben werden. Das Vorzeichen und/oder die Größe des Wertes kann bezüglich einer Widerstandsbestimmung unplausibel sein, um ein die Messung durchführendes Messgerät auf einen geänderten Bedeutungsgehalt der Messung hinzuweisen. Vordefinierte, unplausible Werte können auf spezifische Fehler hinweisen.

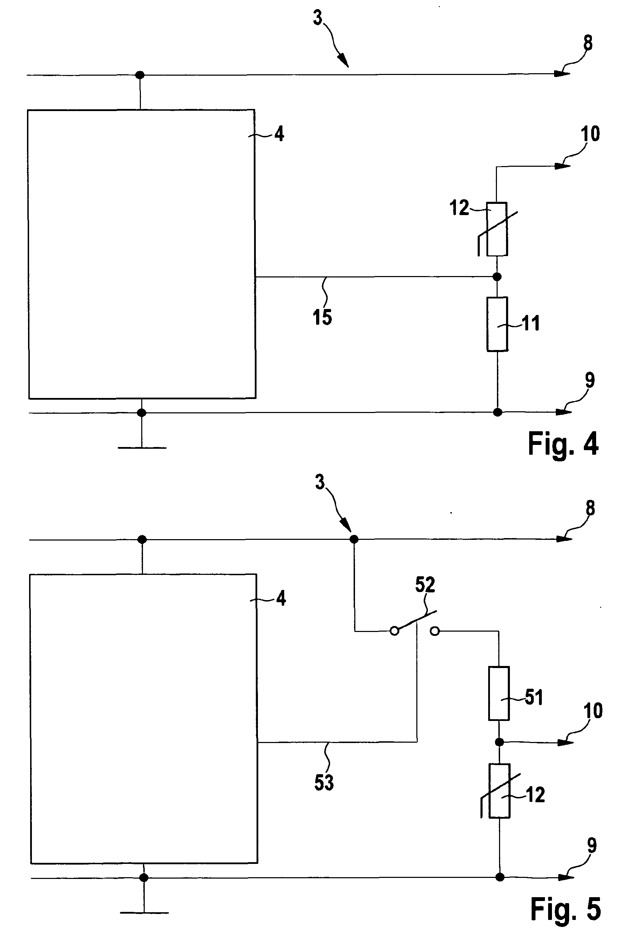

Figur 4 zeigt noch eine weitere alternative Schutzschaltung 3 für das Akkupack 1 aus Figur 1. Im Unterschied zu der in Figur 1 gezeigten Beschaltung der Auswerteeinheit 4 ist kein Schalter 14 vorgesehen und die Steuerleitung 15 ist unmittelbar mit der Verbindung zwischen dem ersten Widerstand 11 und dem NTC-Widerstand 12 verbunden.

Im Normalbetrieb des Akkupacks 1 liegt keine Spannung an der Steuerleitung 15 an. Vorzugsweise besteht ein hoher ohmscher Widerstand zwischen der Steuerleitung 15 und jedem der Anschlüsse 8 und 9.

Erkennt die Auswerteeinheit 4 eine Fehlfunktion des Akkupacks, so legt sie eine Spannung an die Steuerleitung 15 an, beispielsweise mittels einer internen Spannungsquelle entsprechend der Spannungsquelle 32 aus Figur 3. Auch diese Beeinflussung der Temperaturmessschnittstelle 10 kann wie bei der in Figur 3 gezeigten Beschaltung von einem verbundenen Messgerät ausgewertet werden.

Durch Wahl einer geeigneten Spannung auf der Steuerleitung 15 kann eine Temperaturmessung über die Temperaturmessschnittstelle 10 in Richtung eines niedrigeren Widerstandes und somit einer höheren Temperatur frei beeinflusst werden. Eine höhere Spannung kann zur Bestimmung einer höheren Temperatur führen und umgekehrt. In Kombination mit einer gepulsten Ansteuerung der Steuerleitung 15 kann diese Beeinflussung genutzt werden, um beispielsweise außer der unbeeinflussten Temperatur des Akkupacks 1 noch weitere Temperaturen auszugeben, die höher liegen können.

Beispielsweise können in einer zeitlichen Abfolge die Temperaturen der einzelnen Zellen 2 über die Temperaturmessschnittstelle 10 ausgegeben werden. Liegt die Temperatur einer der Zellen 2 unterhalb der Temperatur des Akkupacks 1, so weist dies noch nicht notwendigerweise auf eine kritische Situation sondern eher auf Messfehler und Effekte thermischer Leitfähigkeiten zwischen der Zelle und dem NTC-Widerstand 12 hin. Die Auswerteeinheit beeinflusst den über die Temperaturmessschnittstelle 10 bestimmbaren Temperaturwert nicht, so dass ein externes Messgerät im entsprechenden zeitlichen Abschnitt eine Temperatur für die Zelle 2 bestimmt, die der Temperatur des Akkupacks 1 entspricht.

Liegt im Bereich einer der Zellen 2 eine Störung vor, beispielsweise in Form einer unerwünschten chemischen Reaktion in der Zelle 2, so kann sich dies in einer erhöhten Temperatur der Zelle 2 ausdrücken. Noch bevor die Temperatur des Akkupacks 1 durch lokale Erwärmung durch die Zelle 2 auch im Bereich des NTC-Widerstands 12 erhöht ist, kann die Auswerteeinheit 4 an der Temperaturmessschnittstelle 10 im entsprechenden zeitlichen Abschnitt durch Beaufschlagen der Steuerleitung 15 mit einer geeigneten Spannung die tatsächliche Temperatur der Zelle 2 ausgeben. Das externe Messgerät bestimmt somit einen zeitlichen Temperaturverlauf, der grundsätzlich einer tatsächlichen Temperatur des Akkupacks 1 entspricht, aber in einem zeitlichen Abschnitt, der der Zelle 2 zugeordnet ist, oberhalb dieser Temperatur liegt und der tatsächlichen Temperatur der Zelle 2 entspricht.

Ein konventionelles externes Messgerät, das für eine Auswertung einer zeitlichen Abfolge von Einzeltemperaturen nicht eingerichtet ist, bestimmt in diesem Fall zumindest kurzzeitig in dem der Zelle 2 zugeordneten Zeitabschnitt eine Übertemperatur und kann das Akkupack 1 beispielsweise abschalten, d.h. von einem Verbraucher bzw. von einer Ladeeinrichtung trennen. Ein fortschrittlicheres Messgerät, das die zeitliche Abfolge der Einzeltemperaturen auflösen kann, ist in der Lage, die Übertemperatur der bestimmten Zelle 2 zu bestimmen. Das Messgerät kann daraufhin z.B. eine ausführliche Fehlermeldung ausgeben, die auf die konkrete Zelle und die gemessene Temperatur hinweist, oder einen maximalen Strom durch das Akkupack 1 begrenzen, um die reduzierte Leistungsfähigkeit der Zelle 2 zu berücksichtigen.

Eine gepulste Ausgabe von angepassten Spannungen über die Steuerleitung 15 kann auch genutzt werden, um weitere Betriebszustände des Akkupacks 1 zu signalisieren.

Figur 5 zeigt noch eine weitere alternative Schutzschaltung für das Akkupack 1 aus Figur 1. Der NTC-Widerstand 12 ist zwischen der Messstelle 10 und dem zweiten elektrischen Anschluss 9 verbunden. Von der Messstelle 10 geht ein Widerstand 51 aus, der mittels eines Schalters 52 selektiv mit dem ersten elektrischen Anschluss 8 verbunden ist. Der Schalter 52 ist mittels einer Steuerleitung 53 mit der Auswerteeinheit 4 verbunden.

Im Normalbetrieb des Akkupacks 1 ist der Schalter 52 geöffnet und an der von außen zugänglichen Temperaturmessschnittstelle, die zwischen dem zweiten elektrischen Anschluss 9 und der Messstelle 10 ausgebildet ist, ist nur der Spannungsabfall über den NTC-Widerstand 12 abgreifbar.

Erkennt die Auswerteeinheit 4 eine Fehlfunktion des Akkupacks, so schließt sie den Schalter 52, so dass über den durch den Widerstand 51 und den NTC-Widerstand 12 aufgebauten Spannungsteiler eine Spannung an der Messstelle 10 anliegt, die ein Messgerät auswerten kann, das mit der Temperaturmessschnittstelle 10, 9 verbunden ist.

Der Widerstand 51 kann auch gepulst variierbar ausgelegt sein, so dass an der Messstelle 10 entweder der NTC-Widerstand 12 bestimmt werden oder eine Spannung ausgelesen werden kann.

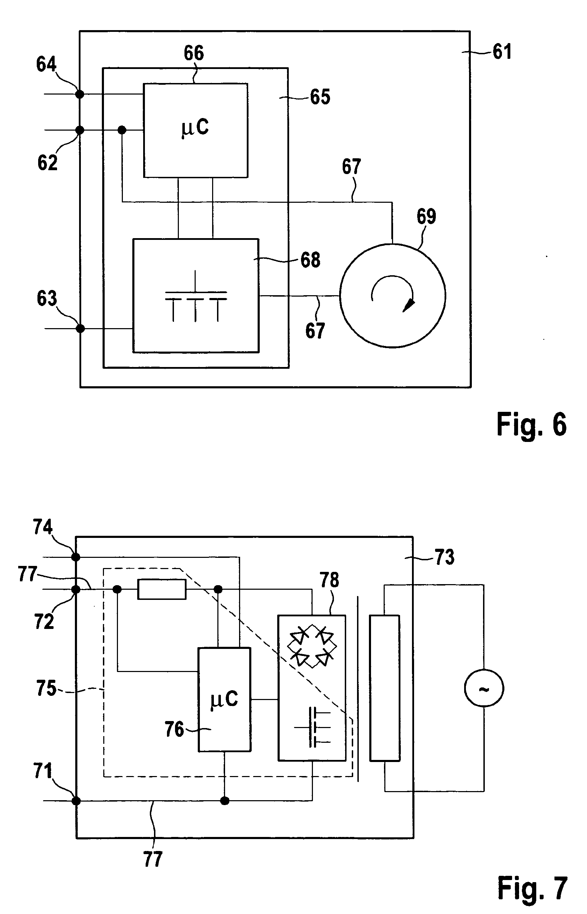

Figur 6 zeigt in einer schematischen Darstellung ein Elektrohandwerkzeug 61 als Verbraucher für den Akkupack 1, das beispielsweise als Bohrmaschine, Schrauber oder Gartenschere usw. ausgebildet sein kann. Das Elektrohandwerkzeug 61 weist elektrische Kontakte 62, 63 auf, die zum Betreiben des Elektrohandwerkzeugs 61 an die elektrischen Anschlüsse 8, 9 des Akkupacks 1 angeschlossen werden. Weiterhin ist am Elektrohandwerkzeug 61 ein Temperaturkontakt 64 vorgesehen, der an die Messstelle 10 angeschlossen wird.

In dem Elektrohandwerkzeug ist eine Akkuschutzelektronik 65 mit einer als Mikrocontroller ausgebildeten Akkuschutzlogik 66 ausgebildet, mit der ein in einem

Strompfad 67 des Akkupacks 1 angeordneten, als Leistungs-MOSFET ausgebildeter Leistungsschalter 68 beeinflussbar ist. Der Leistungsschalter 68 ist zudem steuerbar mit einem das Elektrohandwerkzeug antreibenden Elektromotor 69 verbunden. Die Akkuschutzlogik 66 ist mit der Messstelle 10 und dem zweiten elektrischen Anschluss 9 verbunden. Erkennt die Akkuschutzlogik 66 aufgrund der zwischen der Messstelle 10 und dem zweiten elektrischen Anschluss 9 vorliegenden Spannung eine gepulste oder dauerhafte Widerstandszunahme, so wird eine Fehlfunktion des Akkupacks erkannt und bei der Versorgung des Elektromotors 69 mit Strom berücksichtigt. Beispielsweise kann die Versorgung reduziert oder unterbrochen werden. Dazu ist die Akkuschutzlogik 66 über zwei Steuerleitungen mit dem Leistungsschalter 68 verbunden.

Figur 7 zeigt in einer schematischen Darstellung ein netzgespeistes Ladegerät 73, an das das Akkupack 1 zum Aufladen angeschlossen werden kann. Dazu weist das Ladegerät 73 einen Temperaturanschluss 74 auf, der mit der Messstelle 10 verbindbar ist. Zudem weist das Ladegerät 73 einen ersten und zweiten Ladekontakt 71, 72 auf, die mit dem ersten und dem zweiten elektrischen Anschluss 8, 9 des Akkupacks 1 zum Aufladen des Akkupacks 1 verbindbar sind. Zudem ist im Ladegerät 73 eine weitere Akkuschutzelektronik 75 vorgesehen, die eine weitere Akkuschutzlogik 76 aufweist. Die Akkuschutzlogik 76 ist im Ladepfad 77 eines angeschlossenen Akkupacks angeordnet.

Weiterhin ist ein weiterer Leistungsschalter 78 vorgesehen, der die Ladeleistung beim Aufladen des Akkupacks steuert. Die weitere Akkuschutzelektronik 75 ist mit der Messstelle 10 und dem zweiten elektrischen Anschluss 9 verbunden und erfasst somit den Widerstand bzw. den Spannungsabfall zwischen der Messstelle 10 und dem zweiten elektrischen Anschluss 9. Erkennt die weitere Akkuschutzelektronik 75 einen zu hohen oder zu kleinen Spannungsabfall bzw. einen zu großen oder zu kleinen Widerstand, so wird über die weitere Akkuschutzlogik 76 der weitere Leistungsschalter 78 in der Weise beeinflusst, dass die Ladespannung und/oder der Ladestrom verändert wird.

Mittels dieser Anordnung ist sowohl die bei einer Erhitzung und einer damit einhergehenden Reduzierung des Widerstands zwischen der Messstelle 10 und dem zweiten elektrischen Anschluss 9, als auch eine weitere Fehlfunktion, die durch die Schutzschaltung 3 des Akkupacks 1 in einen erhöhten Widerstand und damit einen erhöhten Spannungsabfall umgewandelt wird, erkennbar. Abhängig von der gewählten Ausführungsform kann die weitere Akkuschutzelektronik 75 bei Erkennen eines zu geringen Spannungsabfalls und damit eines zu geringen Widerstands zwischen dem zweiten elektrischen Anschluss 9 und der Messstelle 10 bzw. bei Erkennen eines zu hohen Spannungsabfalls und damit eines zu hohen Widerstands den Ladevorgang ändern, insbesondere die Ladespannung und/oder den Ladestrom reduzieren oder den Ladevorgang abbrechen.

Somit wird mit der beschriebenen Anordnung zum einen eine sichere Erkennung einer Fehlfunktion des Akkupacks mit Hilfe einer Temperaturmessschnittstelle ermöglicht und zudem eine sichere Beeinflussung des Betriebs des Elektrohandwerkzeugs mit dem Akkupack oder des Ladens des Akkupacks mit einem Ladegerät 73 erreicht.

## Patentansprüche

1. Akkupack (1) für ein Elektrohandwerkzeug, mit einem analogen Temperatursensor (12) auf Widerstandsbasis, der an eine von außen zugängliche Temperaturmessschnittstelle (10) angeschlossen ist, und einer Auswerteeinheit (4), die das Akkupack (1) auf eine Fehlfunktion überwacht, **dadurch gekennzeichnet, dass** die Auswerteeinheit (4) ausgebildet ist, bei Erkennen einer Fehlfunktion des Akkupacks (1) einen an der Temperaturschnittstelle (10) bestimmbaren Widerstand gepulst derart aktiv zu verändern, dass der bestimmbare Widerstand zeitweilig einer anderen Temperatur innerhalb des Akkupacks entspricht.

2. Akkupack (1) nach Anspruch 1, **dadurch gekennzeichnet, dass** das Akkupack mehrere Zellen (2) umfasst und die andere Temperatur die Temperatur einer der Zellen (2) ist.

3. Akkupack (1) nach Anspruch 2, **dadurch gekennzeichnet, dass** die Auswerteeinheit dazu eingerichtet ist, den bestimmbaren Widerstand derart zu verändern, dass er nacheinander den Temperaturen aller Zellen des Akkupacks (1) entspricht.

4. Akkupack (1) nach einem der Ansprüche 1 bis 3, **dadurch gekennzeichnet, dass** die Auswerteeinheit (4) in der Weise ausgebildet ist, dass der bestimmbare Widerstand gepulst variierbar ist.

5. Akkupack (1) nach einem der vorangehenden Ansprüche, **dadurch gekennzeichnet, dass** der Temperatursensor (12) einen negativen Temperaturkoeffizienten aufweist und die Auswerteeinheit (4) ausgebildet ist, bei Erkennen einer Fehlfunktion des Akkupacks (1) einen Widerstand (11, 12) aktiv zu vergrößern, der an die Temperaturschnittstelle (10) angeschlossen ist.

6. Akkupack (1) nach einem der vorangehenden Ansprüche, **dadurch gekennzeichnet, dass** der Temperatursensor (12) einen positiven Temperaturkoeffizienten aufweist und die Auswerteeinheit (4) ausgebildet ist, bei Erkennen einer Fehlfunktion des Akkupacks (1) einen Widerstand (11, 12) aktiv zu verkleinern, der an die Temperaturschnittstelle (10) angeschlossen ist.

7. Akkupack (1) nach Anspruch 5 oder 6, **dadurch gekennzeichnet, dass** die Auswerteeinheit (4) mit einem Schalter (14) verbunden ist, dass der analoge Temperatursensor einen ersten Widerstand (12) aufweist, der mit einem zweiten Widerstand (11) in Serie geschaltet ist, wobei die Serienschaltung des ersten und zweiten Widerstands an die Temperaturschnittstelle (10) angeschlossen ist, dass eine Kurzschlussleitung (13) parallel zum ersten Widerstand (12) angeordnet ist, und dass der Schalter (14) in der Kurzschlussleitung (13) angeordnet ist.

8. Akkupack (1) nach einem der Ansprüche 5 bis 7, **dadurch gekennzeichnet, dass** die Auswerteeinheit (4) in der Weise ausgebildet ist, dass der Widerstand (11) gepulst variierbar ist.

9. Verfahren zum Anzeigen einer Fehlfunktion eines Akkupacks (1), das einen Temperatursensor (12) und eine von außen zugängliche Temperaturmessschnittstelle (10) auf Widerstandsbasis umfasst, mittels einer Auswerteeinheit (4), **dadurch gekennzeichnet, dass** bei Auftreten einer Fehlfunktion des Akkupacks (1) ein an der Temperaturmessschnittstelle (10) bestimmbarer Widerstand derart aktiv verändert wird, dass der bestimmbare Widerstand einer anderen Temperatur innerhalb des Akkupacks entspricht.

10. Verfahren nach Anspruch 9, **dadurch gekennzeichnet, dass** die Spannung gepulst verändert wird.

11. Verfahren nach Anspruch 9 oder 10, wobei über die Temperaturmessschnittstelle (10) eine hohe Temperatur durch einen großen Widerstand und eine niedrige Temperatur durch einen kleinen Widerstand bestimmbar ist und bei Auftreten einer Fehlfunktion des Akkupacks (1) ein mit der Temperaturmessschnittstelle (10) verbundener Widerstand (11, 12) aktiv vergrößert wird.

12. Verfahren nach einem der Ansprüche 9 bis 11, wobei über die Temperaturmessschnittstelle (10) eine hohe Temperatur durch einen kleinen Widerstand und eine niedrige Temperatur durch einen großen Widerstand bestimmbar ist und bei Auftreten einer Fehlfunktion des Akkupacks (1) ein mit der Temperaturmessschnittstelle (10) verbundener Widerstand (11, 12) aktiv verkleinert wird.

## Claims

1. Battery pack (1) for a handheld power tool, having an analogue resistance-based temperature sensor (12) which is connected to a temperature measurement interface (10) which is accessible from the outside, and having an evaluation unit (4) which monitors the battery pack (1) for a malfunction, **characterized in that** the evaluation unit (4) is designed, when a malfunction of the battery pack (1) is identified, to actively change a resistance, which can be determined at the temperature interface (10), in a pulsed manner in such a way that the resistance which can be determined temporarily corresponds to another temperature within the battery pack.

2. Battery pack (1) according to Claim 1, **characterized in that** the battery pack comprises a plurality of cells (2), and the other temperature is the temperature of one of the cells (2).

3. Battery pack (1) according to Claim 2, **characterized in that** the evaluation unit is designed to change the resistance which can be determined in such a way that it corresponds successively to the temperatures of all of the cells of the battery pack (1).

4. Battery pack (1) according to one of Claims 1 to 3, **characterized in that** the evaluation unit (4) is designed in such a way that the resistance which can be determined can be varied in a pulsed manner.

5. Battery pack (1) according to one of the preceding claims, **characterized in that** the temperature sensor (12) has a negative temperature coefficient and the evaluation unit (4) is designed, when a malfunction of the battery pack (1) is identified, to actively increase the value of a resistor (11, 12) which is connected to the temperature interface (10).

6. Battery pack (1) according to one of the preceding claims, **characterized in that** the temperature sensor (12) has a positive temperature coefficient and the evaluation unit (4) is designed, when a malfunction of the battery pack (1) is identified, to actively reduce the value of a resistor (11, 12) which is connected to the temperature interface (10).

7. Battery pack (1) according to Claim 5 or 6, **characterized in that** the evaluation unit (4) is connected to a switch (14), **in that** the analogue temperature sensor has a first resistor (12) which is connected in series with a second resistor (11), wherein the series circuit comprising the first resistor and the second resistor is connected to the temperature interface (10), **in that** a short-circuiting line (13) is arranged in parallel with the first resistor (12), and **in that** the switch (14) is arranged in the short-circuiting line (13).

8. Battery pack (1) according to one of Claims 5 to 7, **characterized in that** the evaluation unit (4) is designed in such a way that the resistor (11) can be varied in a pulsed manner.

9. Method for displaying a malfunction of a battery pack (1), which comprises a temperature sensor (12) and a resistance-based temperature measurement interface (10) which is accessible from the outside, by means of an evaluation unit (4), **characterized in that**, when a malfunction of the battery pack (1) occurs, a resistance which can be determined at the temperature measurement interface (10) is actively changed in such a way that the resistance which can be determined corresponds to another temperature within the battery pack.

10. Method according to Claim 9, **characterized in that** the voltage is changed in a pulsed manner.

11. Method according to Claim 9 or 10, wherein a high temperature due to a high resistance and a low temperature due to a low resistance can be determined by means of the temperature measurement interface (10), and, when a malfunction of the battery pack (1) occurs, the value of a resistor (11, 12) which is connected to the temperature measurement interface (10) is actively increased.

12. Method according to one of Claims 9 to 11, wherein a high temperature due to a low resistance and a low temperature due to a high resistance can be determined by means of the temperature measurement interface (10), and, when a malfunction of the battery pack (1) occurs, the value of a resistor (11, 12) which is connected to the temperature measurement interface (10) is actively reduced.

## Revendications

1. Bloc d'accumulateurs (1) pour un outil électroportatif, comprenant une sonde de température (12) analogique à base de résistance, laquelle est raccordée à une interface de mesure de température (10) accessible depuis l'extérieur, et une unité d'interprétation (4) qui surveille le bloc d'accumulateurs (1) pour y détecter un défaut de fonctionnement, **caractérisé en ce que** l'unité d'interprétation (4) est configurée pour, sur détection d'un défaut de fonctionnement du bloc d'accumulateurs (1), modifier activement de manière impulsionnelle une résistance pouvant être définie au niveau de l'interface de mesure de température (10) de telle sorte que la résistance pouvant être définie correspond temporairement à une autre température à l'intérieur du bloc d'accumulateurs.

2. Bloc d'accumulateurs (1) selon la revendication 1, **caractérisé en ce que** le bloc d'accumulateurs comprend plusieurs cellules (2) et l'autre température est la température de l'une des cellules (2).

3. Bloc d'accumulateurs (1) selon la revendication 2, **caractérisé en ce que** l'unité d'interprétation est conçue pour modifier la résistance pouvant être définie de telle sorte qu'elle correspond aux températures de toutes les cellules du bloc d'accumulateurs (1) l'une après l'autre.

4. Bloc d'accumulateurs (1) selon l'une des revendications 1 à 3, **caractérisé en ce que** l'unité d'interprétation (4) est configurée de telle sorte que la résistance pouvant être définie peut être modifiée de manière impulsionnelle.

5. Bloc d'accumulateurs (1) selon l'une des revendications précédentes, **caractérisé en ce que** la sonde de température (12) possède un coefficient de température négatif et l'unité d'interprétation (4) est configurée pour, sur détection d'un défaut de fonctionnement du bloc d'accumulateurs (1), augmenter activement une résistance (11, 12) qui est raccordée à l'interface de mesure de température (10).

6. Bloc d'accumulateurs (1) selon l'une des revendications précédentes, **caractérisé en ce que** la sonde de température (12) possède un coefficient de température positif et l'unité d'interprétation (4) est configurée pour, sur détection d'un défaut de fonctionnement du bloc d'accumulateurs (1), réduire activement une résistance (11, 12) qui est raccordée à l'interface de mesure de température (10).

7. Bloc d'accumulateurs (1) selon la revendication 5 ou 6, **caractérisé en ce que** l'unité d'interprétation (4) est reliée à un commutateur (14), **en ce que** la sonde de température analogique possède une première résistance (12) qui est branchée en série avec une deuxième résistance (11), le circuit série composé de la première et de la deuxième résistance étant raccordé à l'interface de mesure de température (10), **en ce qu'**une ligne de court-circuit (13) est disposée en parallèle avec la première résistance (12) et **en ce que** le commutateur (14) est disposé dans la ligne de court-circuit (13).

8. Bloc d'accumulateurs (1) selon l'une des revendications 5 à 7, **caractérisé en ce que** l'unité d'interprétation (4) est configurée de telle sorte que la résistance (11) peut être modifiée de manière impulsionnelle.

9. Procédé d'indication d'un défaut de fonctionnement d'un bloc d'accumulateurs (1), lequel comprend une sonde de température (12) et une interface de mesure de température (10) accessible depuis l'extérieur à base de résistance, au moyen d'une unité d'interprétation (4), **caractérisé en ce que** lorsqu'il se produit un défaut de fonctionnement du bloc d'accumulateurs (1), une résistance pouvant être définie au niveau de l'interface de mesure de température (10) est modifiée activement de telle sorte que la résistance pouvant être définie correspond à une autre température à l'intérieur du bloc d'accumulateurs.

10. Procédé selon la revendication 9, **caractérisé en ce que** la tension est modifiée de manière impulsionnelle.

11. Procédé selon la revendication 9 ou 10, **caractérisé en ce que** par le biais de l'interface de mesure de température (10), une température élevée peut être définie par une résistance élevée et une température basse par une faible résistance et, lorsqu'il se produit un défaut de fonctionnement du bloc d'accumulateurs (1), une résistance (11, 12) reliée à l'interface de mesure de température (10) est augmentée activement.

12. Procédé selon l'une des revendications 9 à 11, **caractérisé en ce que** par le biais de l'interface de mesure de température (10), une température élevée peut être définie par une faible résistance et une température basse par une résistance élevée et, lorsqu'il se produit un défaut de fonctionnement du bloc d'accumulateurs (1), une résistance (11, 12) reliée à l'interface de mesure de température (10) est diminuée activement.
